(19) Europäisches Patentamt
European Patent Office
Office européen des brevets

(11) **EP 1 750 435 A2**

(12) **EUROPEAN PATENT APPLICATION**

(43) Date of publication:
**07.02.2007 Bulletin 2007/06**

(51) Int Cl.:
**H04N 5/232** *(2006.01)*

(21) Application number: **06254119.8**

(22) Date of filing: **04.08.2006**

(84) Designated Contracting States:
**AT BE BG CH CY CZ DE DK EE ES FI FR GB GR HU IE IS IT LI LT LU LV MC NL PL PT RO SE SI SK TR**
Designated Extension States:
**AL BA HR MK YU**

(30) Priority: **04.08.2005 JP 2005227310**

(71) Applicant: **Ricoh Company, Ltd.**
**Tokyo 143-8555 (JP)**

(72) Inventor: **Matsutani, Atsushi**
**c/o Ricoh Company, Ltd.**
**Ohta-ku, Tokyo 143-8555 (JP)**

(74) Representative: **Leeming, John Gerard**
**J.A. Kemp & Co.,**
**14 South Square,**
**Gray's Inn**
**London WC1R 5JJ (GB)**

(54) **Camera and control method for the same**

(57)     A camera includes an angular sensor (102) for detecting the angular acceleration of the camera, a driving mechanism for displacing a CCD solid image pick up element (45) with driving coils (106) to compensate the camera shake, Hall elements (107) for detecting the operational position of the CCD solid image pick up element (45) and a the camera shake compensating system for controlling the driving coils (106) with servo control in accordance with the angle change of the camera sensed by the angular sensor (102), referring to the operational position sensed by the Hall elements (107), wherein at least one of the frequency of performing the servo control and the frequency of performing the detection of angle with the angular sensor (102) can be variably controlled.

FIG. 11A

# FIG. 11B

Ⓑ

S53

MAXIMUM
RECORDED PIXELS? — YES

NO

S54

(CONTROL PERIOD)
= G

Ⓒ

S47

MAXIMUM
RECORDED PIXELS? — YES

NO

S55

(CONTROL PERIOD)
= H

S48

(CONTROL PERIOD)
= C

S49

(CONTROL PERIOD)
= D

Ⓓ

**Description**

The present invention relates to a camera configured to deal with a camera shake compensation in a still camera, video camera or the like. More specifically, the present invention relates to a camera having a camera shake compensating function suitable for the so-called digital camera or the like, wherein image information acquired by a solid image pick up element or the like is stored in a recording medium.

The present invention also relates to a control method for such a camera.

In a camera, such as a still camera, video camera or the like, camera shake causes image quality to be deteriorated in a still image as well as in an animation. In order to avoid such deterioration of image quality, the following procedures are carried out: The magnitude of camera shake is firstly determined either from angular information acquired by an angular sensor, or from the positional difference between sequentially taken images of an object. Thereafter, the position of the object image is moved in accordance with the magnitude of camera shake so as to eliminate the camera shake in the image plane of the camera. In the camera shake compensation, two methods are employed: In one method, i.e., in an optical compensation method, the camera shake is cancelled by deflecting or moving at least one of the imaging optics on the image plane. In another method, i.e., in the electrical compensation method, the camera shake is cancelled by moving a restricted area of an object image taken by an image pick up clement on the image plane.

These camera shake compensating methods in the prior art are disclosed, for instance, in Patent Document 1 (Japanese Patent Laid-Open No. 2000 - 81646) and Patent Document 2 (Japanese Patent Laid-Open No. 2001-66655).

Patent Document 1 discloses that the displacement of the camera body due to the hand shake is sensed by means of an acceleration sensor or the like, and the camera shake is compensated by moving either an image pick up element or a correction lens in the imaging optics in accordance with the magnitude of camera shake so as to eliminate the displacement of the object image on the imaging plane. The correction lens is used to compensate the camera shake, and it is included as a substantial element in the imaging optics. In other words, Patent Document 1 disclosed the basic technique of compensating the camera shake.

On the other hand, Patent Document 2 discloses that a camera includes a base plate on which a photoelectric conversion device consisting of an image pick up element is arranged, wherein the magnitude of camera shake is detected by a position sensor and further the displacement of the base plate relative to the camera body is detected by another sensor, in which case, the camera shake is compensated by shifting the base plate relative to the camera body in accordance with the magnitude of camera shake. In other words, Patent Document 2 discloses the technique of servo-controlling the position of the base plate including the image pick-up element relative to the camera body to eliminate the displacement due to the camera shake.

As described in Patent Document 2, the camera including a camera shake compensating mechanism for servo-controlling to move the image pick up element consisting of a CCD (charge coupled device) toward a target position allows an image of an object to follow the target position on the image plane such that the camera shake is cancelled. Even in the monitoring mode, both the detection of camera shake and servo-control are generally carried out in substantially the same precision as in the still image taking mode. In the monitoring mode, the camera is used as an electronic finder for determining the position and arrangement of objects on the image plane images as well as for ensuring the focusing conditions of the optics, and therefore, the camera can be used without inconvenience, even if the camera is shaken to some extent, and/or even if a certain response time is required for the camera shake compensation. Even in this case, the load applied on a CPU (central processing unit) for controlling the operation of all the function elements in the camera is significantly increased, to carry out the control in substantially the same level as in the photographing mode.

In particular, when driving the mechanism of compensating the camera shakes with the aid of software control, the process of camera shake compensation cannot mostly be carried out parallel to the other processes. As a result, the processes other than the camera shake compensation not only reduce the computing capacity of CPU, but also the processes are prohibited by the camera shake compensation process, thereby causing the signal transfer rate of a bus system to be significantly reduced.

An object of the present invention is to provide a camera in which a load applied in both servo-control and acquisition of angular information can be reduced, along with energy saving and resource conservation effectively achieved, without any substantial reduction of accuracy in camera shake compensation.

Another object of the present invention is to provide a control method suitable for such a camera.

To accomplish the above objects, a camera equipped with a camera shake compensation mechanism, according to one embodiment of the present invention includes: an angular information acquisition sensor for acquiring the angular information about at least one of the angular position, angular velocity and angular acceleration of the camera; a compensation operating mechanism for displacing a compensation performing section to compensate the camera shake; a position detection sensor for detecting the operational position of the compensation performing section in the compensation operating mechanism; and a servo control device for displacing the compensation operating mechanism with a servo control, in response to the angular change of the camera obtained by the angular information acquisition sensor, referring to the operational position obtained by the position detection sensor, wherein a frequency control device is provided to be capable of variably controlling at least one of the frequency of performing the servo control by the servo control device and the frequency of performing the angular information acquisition by the angular information acquisition sensor.

The invention will be described further below with reference to an exemplary embodiment and the accompanying drawings, in which:

FIG.1 is a schematic plan view of a digital camera in an embodiment according to the present invention.
FIG.2 is a front view of the digital camera in FIG.1, viewed from the side of an object to be photographed.
FIG.3 is a rear view of the digital camera in FIG.1, viewed from the user's side.
FIG.4 is a block diagram showing the system of the digital camera in FIG.1.
FIG.5 is a flow chart for describing the basic function of the digital camera in FIG.1.
FIG.6 is a schematic perspective view of the imaging system for describing the principle of camera shake compensation in the digital camera of FIG.1.
FIG.7 is drawings for explaining the mechanism of driving a solid CCD image pick up element in the digital camera of FIG.1A: front view, FIG.1B: side view and FIG.1C: rear view.
FIG.8 is an exploded perspective view of the mechanism of driving a solid CCD image pick up element.
FIG.9 is a diagram showing the relationship between the focal distance and the displacement of the CCD image pick up element in the digital camera of FIG.1.
FIG.10 is a flow chart showing the outline of the photographing process in the digital camera of FIG.1.
FIG.11 is a flow chart showing the outline of the determination of the control period in the photographing process of FIG.10.
FIG.12 is a flow chart showing the outline of the camera shake compensating process in the digital camera of FIG.1.
FIG.13 is a graphic diagram describing the servo-control for T[s] period in the shake compensation of the digital camera in FIG.1.
FIG.14 is a graphic diagram describing the servo-control for 2*T[s] period in the shake compensation of the digital camera in FIG.1.

Referring now to the accompanying drawings, preferred embodiment of the present invention will be described in detail below.

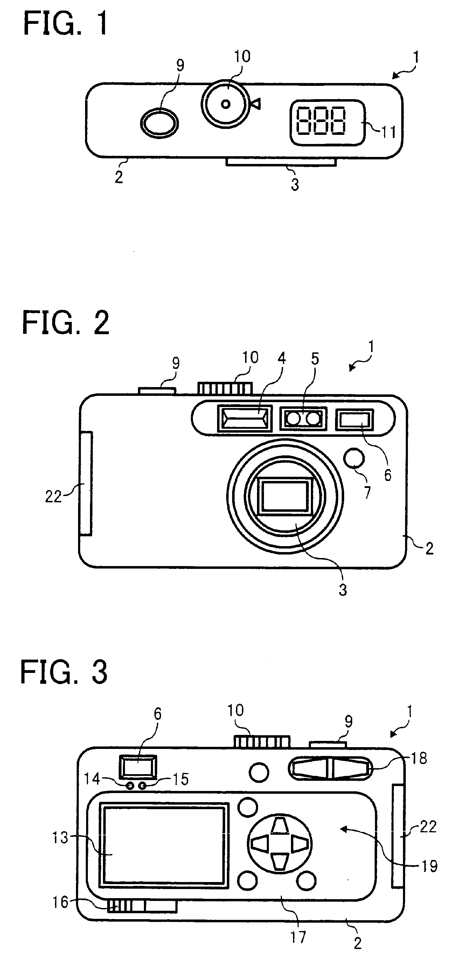

FIGs.1 to 3 show an embodiment of an image picking up device according to the invention, wherein the image picking up device is used as a digital camera. A digital camera 1 is equipped with a mirror body unit 3, a strobe section 4, a range-measuring unit 5, an optical finder 6 and a remote-controlled light-receiving section 7 on the front side of a camera body 2, facing an object to be photographed. Moreover, the digital camera 1 is equipped with a release button 9, a mode selection dial 10 and a sub-LCD (liquid crystal display) 11 on the upper side of the camera body 2, and it is equipped with an LCD monitor 13, an AF (auto-focus)-LED (light emitting diode) 14, a strobe LED 15, a power switch 16, an operation button unit 17 and a zoom button 18 on the rear side of the camera body 2, normally facing a user. Furthermore, the camera body 2 has a memory card slot 22 on one side thereof.

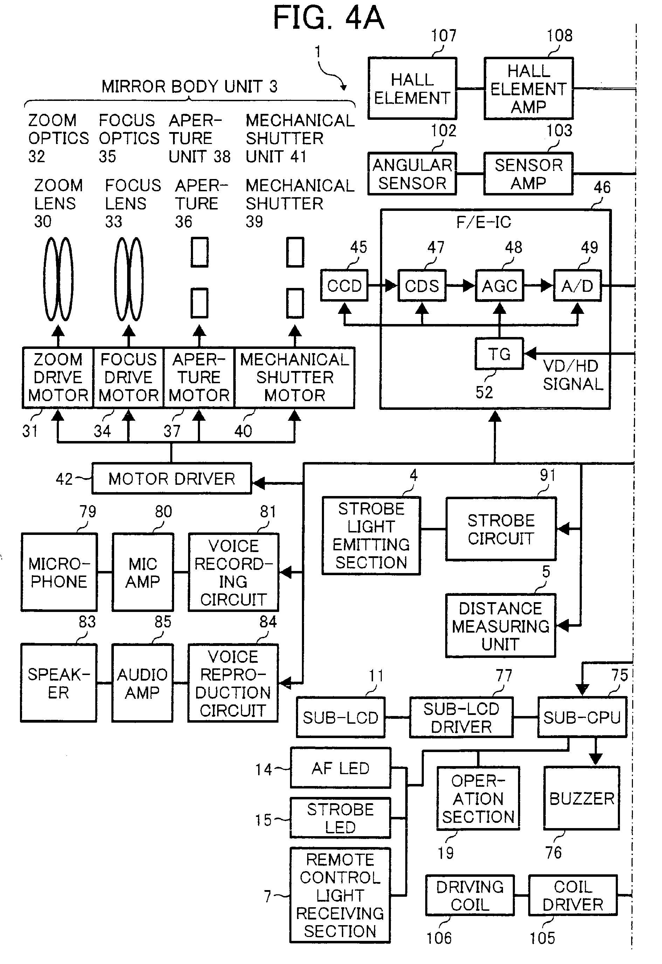

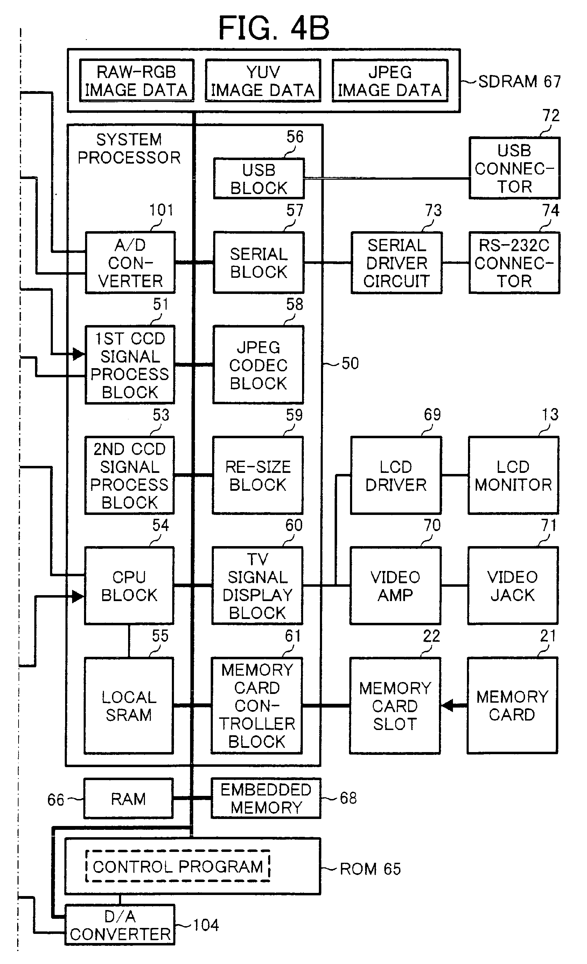

An operation section 19 is comprised of the release button 9, the mode selection dial 10, the power switch 16, the operation button unit 17 and the zoom button 18. A recording medium of memory card 21 (see FIG. 4) is inserted into the memory card slot 22, and stored therein.

In other words, it can be stated that the mirror body unit 3 including an optics for emitting and focusing the incident light of photographing is disposed in the vicinity of the center on the front side of the camera body 2 of the digital camera 1, and that the strobe light-emitting section 4 for emitting strobe light onto an object to be photographed, the range measuring unit 5 for determining the distance between the camera body and the object in the auto-focus (AF) operation, and the optical finder 6 used to inspect the range of the view field with user's eye are positioned on the upper part of the mirror body unit 3.

Furthermore, the remote-controlled light receiving section 7 for receiving light for the remote-control from a remote controller (not shown) is positioned below the optical finder 6, whereas the release button 9 for instructing the shooting, the mode selection dial 10 for switching between shooting modes, and the sub-LCD 11 for displaying the number of photographed frames and the number of un-photographed frames are positioned on the upper part of the camera body 2 of the digital camera 1.

Moreover, the LCD monitor 13 for displaying taken image, the AF-LED 14 for indicating the AF focusing condition in the photograph state, the strobe LED 15 for indicating the charge level of the power capacitor for strobe, the power switch 16 for turning on/off the power supply, the operation button unit 17 for instructing and/or setting the operation units from the outside, and the zoom button 18 for zoom operation are positioned on the rear side of the camera body 2 of the digital camera 1. In this case, the AF-LED 14 and strobe LED 15 can also be used for operations other than the AF and strobe operations, depending on the operation mode of the system; for example, they can be used to indicate that the memory card 21 is accessed to (see FIG.4). Herein, the release button 9, mode selection dial 10, power switch 16, operation button unit 17 and zoom button 18 are all called as the operation section 19, as mentioned above. The memory card slot 22, into which memory card 21 (see FIG.4) can be inserted, is positioned on the side of the camera body 2 of the digital camera 1, as is also described above. In addition, the digital camera 1 is equipped with a battery storage (not shown), into the inside of which a battery (not shown) can be removably inserted.

FIG.4 schematically shows an overview of the arrangement of the system in the digital camera 1 shown in FIGs.1 to 3.

The digital camera 1 shown in FIG.4 includes the mirror body unit 3, the strobe light-emitting section 4, the range-measuring unit 6, the remote-controlled light receiving section 7, the sub-LCD 11, the LCD monitor 13, the AF-LED 14, the strobe LED 15, the operation section 19 and the memory card slot 22, which are all described, referring to FIGs.1 to 3. The operation section 19 includes the release button 9, the mode selection dial 10, the power switch 16, the operation button unit 17 and the zoom button 18. The memory card 21 as recording medium is stored in the memory card slot 22 represented by a memory card interface (I/F).

Moreover, the digital camera 1 shown in FIG.4 is equipped with a zoom lens 30, a zoom driving motor 31, a focus lens 33, a focus lens driving motor 34, an aperture stop 36, an aperture motor 37, a mechanical shutter 39, a mechanical shutter motor 40, a motor driver 42, CCD (charge-coupled device) solid image-picking up element 45, an F/E (front end) - IC (integrated circuit) 46, a system processor 50, a ROM (read only memory) 65, a RAM (random access memory) 66, a SDRAM (synchronous dynamic RAM) 67, a built-in memory 68, an LCD driver 69, a video amplifier 70, a video jack 71, a USB (Universal Serial Bus) connector 72, a serial driver circuit 73, an RS-232C connector 74, a sub-CPU (central processing section) 75, a buzzer 76, a sub-LCD driver 77, a microphone 79, a microphone amplifier 80, a voice signal recording circuit 81, a speaker 83, a voice reproducing circuit 84, an audio amplifier 85, a DC-DC (direct current - direct current) converter 86 and a strobe circuit 91.

A zoom optics 32 is formed by the zoom lens 30 and the zoom lens driving motor 31; a focus optics 35 is formed by the focus lens 33 and the focus lens motor 34; an aperture unit 38 is comprised of the aperture 36 and the aperture motor 37; and a mechanical shutter unit 41 is formed by the mechanical shutter 39 and the mechanical shutter motor 40. The F/E-IC 46 includes a CDS (Correlated Double Sampling) section 47, an AGC (Automatic Gain Controller) 48, an A/D (analog-digital) converter 49 and a TG (Timing Signal Generator) 52. The system processor 50 is equipped with a first CCD signal processing block 51, a second CCD signal processing block 53, a CPU (central processing section) block 54, a local SRAM (static RAM) 55, a USB block 56, a serial block 57, a JPEG CODEC block 58, a resize block 59, a TV (television) signal display block 60 and a memory card controlling block 61.

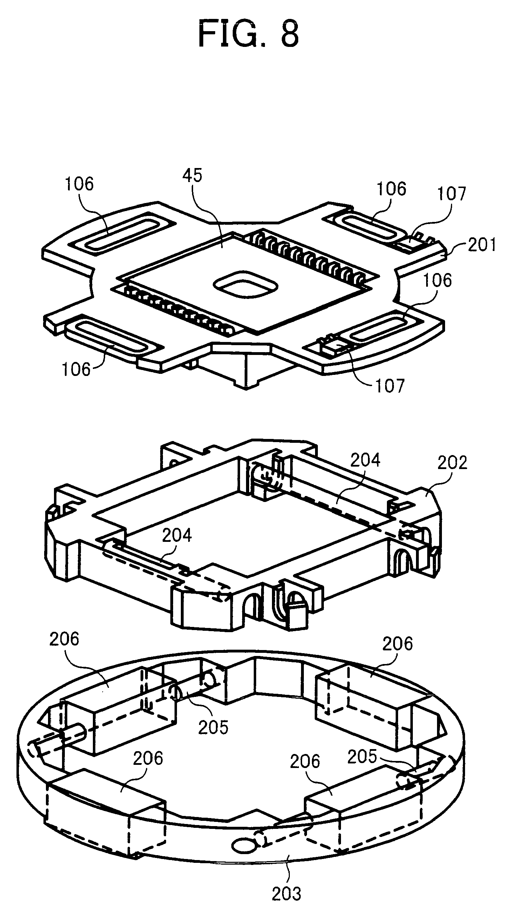

Moreover, the digital camera 1 shown in FIG.4 is equipped with an A/D (analog-digital) converter 101, an angular sensor 102, a sensor amplifier 103, a D/A (digital-analog) converter 104, coil drivers 105, driving coils 106, Hall elements 107 and Hall element Amps (Hall element amplifiers) 108 (see also FIG. 8) in order to realize the camera shake compensation according to the present invention.

In FIG.4, the mirror body unit 3 is formed by the zoom optics 32 including the zoom lens 30 serving as a driving element for receiving an optical image of an object, and the zoom drive motor 31 serving as a drive motor for driving the zoom lens 30; the focus optics 35 including the focusing lens 33 and the focus driving motor 34; the aperture unit 38 including the aperture 36 and the aperture motor 37; the mechanical shutter unit 41 including the mechanical shutter 39 and the mechanical shutter motor 40; and a motor driver 42 for driving DC motors installed in the zoom driving motor 31, the focus driving motor 34, the aperture motor 37 and the mechanical shutter motor 40.

In this case, the motor driver 42 is controlled and driven in accordance with the driving instructions from the CPU block 54 in the system processor 50, which instructions are processed on the basis of both an input signal from the remote-controlled light receiving section 7 and an operation input signal from the operation section 19.

Control programs, parameters for the control and others, all of which are represented by corresponding codes which are readable by the CPU block 54, are stored in the ROM 65. When the digital camera 1 is turned on by the power switch 16 (FIG.3), the above-mentioned control programs are loaded on a main memory (not shown). Consequently, the CPU block 54 controls the respective elements of the digital camera 1 in accordance with the programs loaded thereon, and it further transmits data necessary for the control into the RAM 66 and the local SRAM 55 in the system processor 50, so that the data are temporarily stored therein.

In the embodiment described herein, a re-writable flush memory is used for the ROM 65. A usage of such a re-writable non-volatile memory as flush memory permits to change the control program and parameters necessary for the control, thereby making it possible to improve or version up the functions of the camera with ease.

The solid CCD image pick up element 45 photo-electrically converts optical image information received by the mirror body unit 3 into an electrical analog image signal. The F/E-IC 46 is equipped with the CDS section 47 for carrying out the correlated double sampling to remove the image noise; the AGC 48 for adjusting the gain; the A/D converter 49 for converting an image signal to a digital signal; and the TG 52 for receiving a vertical synchronization signal (VD signal) and a horizontal synchronization signal (HD signal) from the first CCD signal processing block 51 of the system processor 50 to generate drive-timing signals for the CCD solid image pick up element 45 and F/E-IC 46.

The system processor 50 is equipped with the first CCD signal processing block 51 for outputting the above-mentioned VD and HD signals after carrying out both the white balance adjustment and the gamma adjustment for the digital image data supplied from the CCD solid image pick up element 45 via the F/E-IC 46; the second CCD signal processing block 53 for converting into the brightness data and color difference data by means of the filtering process; the CPU block 54 for controlling the respective elements of the digital camera 1 such as the motor driver 42 and the CCD solid image-picking up element 45 in accordance with the control programs stored in the ROM 65 on the basis of the signals supplied from the remote-control light receiving section 7 and the operation section 19; the local SRAM 55 for temporarily storing data necessary for the control of the CPU block 54; the USB block 56 for communicating with an external component, such as PC (personal computer) or the like, via the USB interface; the serial block 57 for serially communicating with the external component, such as PC or the like; the JPEG-CODEC block 58 for carrying out the data compression/expansion according to the JPEG standard; the resize block 59 for increasing/decreasing the size of the image data with the interpolation process; the TV signal display block 60 for generating video signals to display image data on an LCD monitor 13 and/or external component, such as TV or the like; the memory card controller block 61 for carrying out the control of the memory card 21 in which the data of the taken image are stored; and the A/D converter 101 for A/D converting the detection signals from the angular sensor 102 and the Hall sensor 107, as described below.

The SDRAM 67 is used to temporarily store image data in various stages, when various types of processing are applied to the image data by means of the system processor 50. The image data thus stored are, for example, "RAW-RGB image data" in the state after carrying out the white balance correction and the gamma correction for the image data supplied from the solid CCD image pick up element 45 via the F/E-IC 46, with the aid of the first CCD signal processing block 51; "YUV image data" in the state after the image data are converted to the brightness data and color difference data in the second CCD signal processing block 53, "JPEG image data" in the state after carrying out the JPEG compression or others in the JPEG-CODEC block 58, and so on. The memory card slot 22 is formed as a slot-shaped insertion part used to removably insert the memory card 21. The built-in memory 68 is used to store the image data of taken photograph, for example, when the memory card 21 is not inserted into the memory card slot 22, so that the image data can be stored in the built-in memory 68, even when the memory card 21 is not yet inserted thereinto.

The LCD driver 69 drives the LCD monitor 13 and converts the video signal supplied from the TV signal display block 60 into a signal to be displayed on the LCD monitor 13, so that the user is able to monitor the status of the object, or to watch the taken image, or to examine the image data stored in the memory card 21 or the built-in memory 68 on the LCD monitor 13, before photographed.

The video amplifier 70 is used to impedance-convert a video signal output from the TV signal display block 60 into, for example, a video signal having a 75 Ω impedance. The video jack 71 is used to connect the digital camera to an external display device, such as TV, on which a video signal can be displayed. The USB connector 72 is used to connect the digital camera to an external component, such as a PC or the like, via the USB, in order to communicate the digital camera with the external component. The serial driver circuit 73 is used to convert the output signal from the serial block 57, in order to communicate the digital camera with an external component, such as a PC or the like. The RS-232C connector 74 is used to perform a serial connection between the digital camera and an external device, such as a PC or the like.

The sub-CPU 75 is used as a CPU which is comprised of a built-in microprocessor including, for example, a ROM, a RAM and others, to supply the output signal from the remote-controlled light receiving section 7 and/or the operation section 19 to the CPU block 54 as user's operation signal as well as to convert the control information supplied from CPU block 54, depending on the status of the digital camera 1, into control signals for the sub-LCD 11, an AF-LED 14, a strobe LED 15 and a buzzer 76, in which case, the converted control signals are supplied to the CPU block 54.

The sub-LCD 11 is used as a display unit for indicating the number of, for example, possible frames to be taken, whereas the sub-LCD driver 77 is used as a circuit for driving the sub-LCD 11, based on the output signal from the sub-CPU 75.

The AF-LED 14 is used as an LED for indicating the in-focus state when taking a photograph, whereas the strobe LED 15 is used as an LED for indicating the state of charge accumulated in the capacitor for strobe light. In conjunction therewith, the AF-LED 14 and the strobe LED 15 can be used as another display for indicating, for example, the state of accessing to the memory card. The operation section 19 includes keys and switches which are manipulated by a user. The remote-controlled light receiving section 7 receives signals from a remote controller (a signal transmitter) manipulated by a user.

A voice recording unit is formed by a microphone 79 to which a user outputs a voice signal, a microphone amplifier 80 for amplifying the input voice signal, and the voice signal recording circuit 81 for recording the amplified voice signal. Moreover, a voice reproducing unit is comprised of the voice reproducing circuit 84 for converting a recorded voice signal into a signal to be output from the speaker 83, the audio amplifier 85 for amplifying the converted voice signal to drive the speaker 83 for outputting the amplified voice signal as an audio signal.

The angular sensor 102 is used as a sensor for acquiring the angular information about an angular position, angular velocity or angular acceleration. In the present case, it is used to detect an angular acceleration. The sensor amplifier 103 amplifies the signal output from the angular sensor 102, and then supplies the amplified signal to the A/D converter 101 in the system processor 50. The D/A converter 104 converts the analog signal for compensating the camera shake, which analog signal is supplied from the CPU block 54, into an analog signal, and then supplies the converted analog signal to the coil drivers 105. Subsequently, the coil drivers 105 amplify the analog signal, and then supply a driving signal of the amplified signal to the driving coils 106 for driving the CCD solid image pick up element 45. In accordance with the driving signal, the driving coils 106 generate a corresponding magnetic field.

The camera shake is compensated by driving the CCD solid image pick up element 45, as described below in detail. The Hall elements 107 detect the displacement of the CCD solid image pick up element 45. The displacement signal thus detected is amplified by the Hall element amplifiers 108, and then supplied to the A/D converter 101.

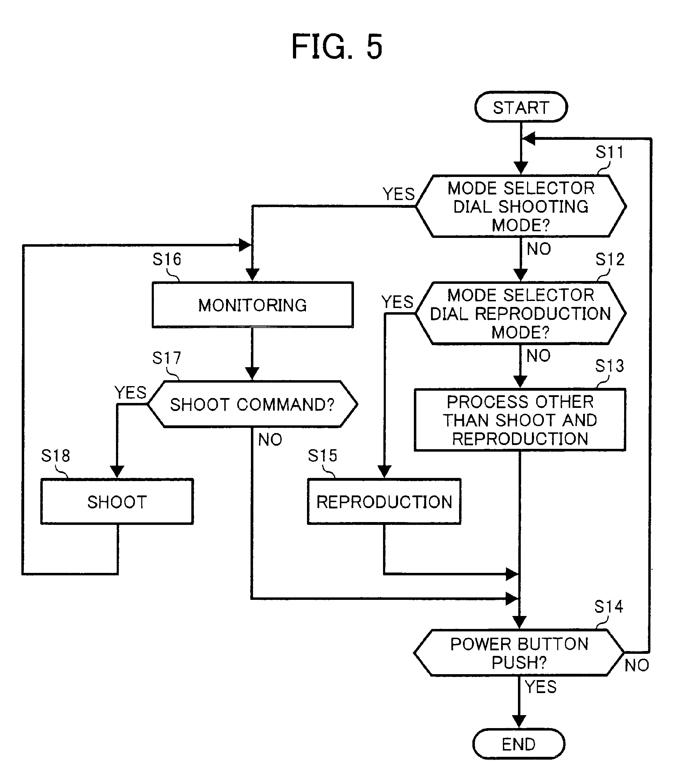

FIG.5 is a flow chart describing the outline of the basic operation of the digital camera 1 shown in FIG.1.

The digital camera 1 can be operated in several operation modes, including at least the photograph mode and the reproduction mode, and it can be also operated, by switching between these operation modes, as shown in FIG.5. In the photograph mode, the digital camera 1 allows to take not only a shot of an object as a single still image, but also sequential shots thereof, as the so-called sequence photographs or an animation.

When the operation starts, it is inspected whether or not mode selection dial 10 in the operation section 19 is set in the photograph mode (step S11). In the case when the photograph mode is not set, it is further checked whether or not the reproduction mode is set (step S12). When neither the photograph mode nor the reproduction mode is set, an operation in the operation mode other than the photograph mode and reproduction mode is carried out (step S13). Subsequently, it is checked whether or not the power switch 16 in the operation section 19 is turned off (step S14).

In the case when the power switch 16 is not turned off, the flow returns to the step S11. In the case when it is confirmed in step S11 that the photograph mode is not set and when it is also confirmed in step S12 that the reproduction mode is selected, the process of reproduction is carried out (step S15). In step S14, it is checked whether or not the power switch 16 is turned off. When it is confirmed that the power switch 16 is not turned off, the flow turns to the step S11.

When it is confirmed in the step S11 that the photograph mode is selected, the monitor operation is carried out (step S16). Subsequently, it is inspected whether or not the instruction of photographing is given (step S17). In the case when the instruction of photographing is not given, it is checked in the step S14 whether or not the power switch 16 is turned off. When the power switch 16 is not turned off, the flow returns to the step S11. When it is confirmed in the step S11 that the photograph mode is still selected, the monitoring continues in step S16. When the instruction of photographing is not provided in step S17, these processes are repeated and monitoring is carried out. When, however, the instruction of photographing is provided in step S17, the process of photographing is carried out (step S18), and then the flow returns to the step S16 and the monitoring continues. When it is confirmed in the step S14 that the power switch 16 is turned off, the power supply is shut down, thereby causing the operation to be ended.

In the monitoring process of the step S16, the menu prepared can be called, thereby enabling several settings of operation to be changed. In the reproduction process of the step S15, a plurality of the taken images can be reproduced after replacing with another, or several thereof can simultaneously be displayed on the LCD monitor 13. In conjunction therewith, one of these taken images can also be displayed on the LCD monitor 13 at a greater magnification.

In the following, the camera shake compensation according to the present invention will be described.

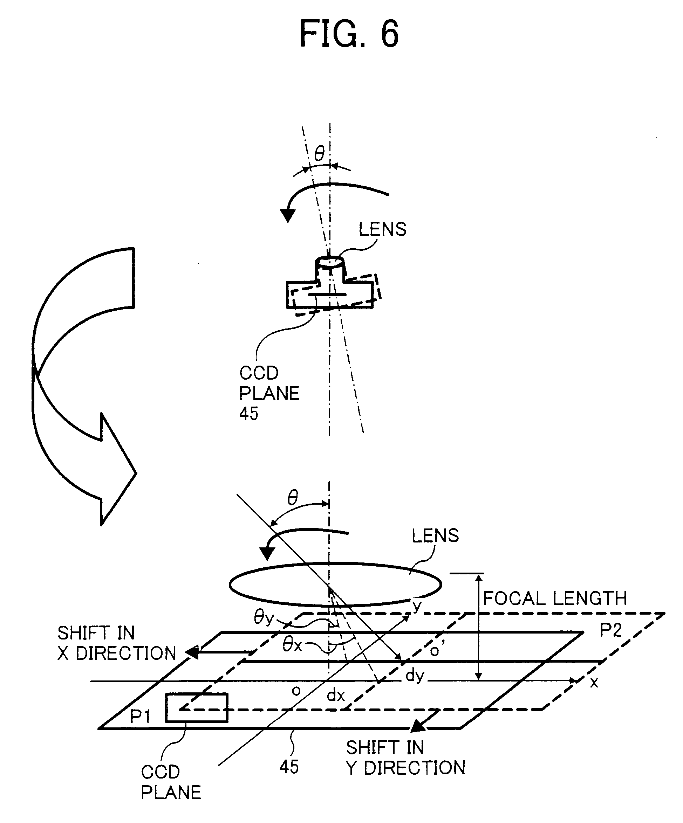

FIG.6 shows the principle of compensating the camera shake, which is employed herein. The image capturing plane (CCD plane) of the CCD solid image pick up element 45 is located at a position P1. Part of an object is imaged on a position of "o". However, when the camera is rotated by θx and θy respectively around the x and y axes, the image plane is shifted to a position P2, so that the corresponding part of the object is imaged at a position of "o'''. If, therefore, the image plane is displaced by dx and dy respectively in the directions x and y, such that it is located at the position P2, the object is imaged at the original position on the image plane. Accordingly, the object can be imaged on the same image plane as in the case of no camera shake, i.e., on the image plane located at P1.

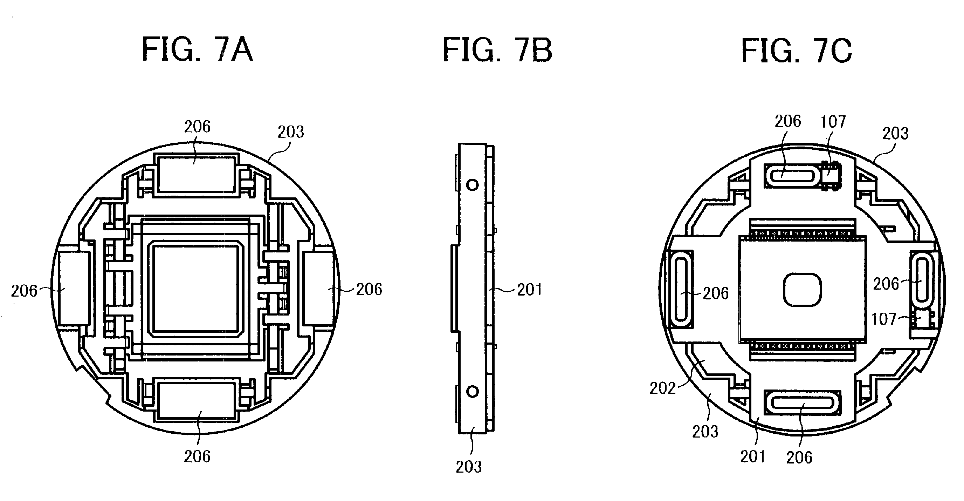

The mechanism for driving the CCD solid image pick up element 45 is shown in FIGs.7 and 8. The CCD driving mechanism is comprised of a CCD stage 201, a slide frame 202, a fixing frame 203, a first pair of slide rails 204, a second pair of slide rails 205, four driving coils 106, two Hall elements 107 and four magnets 206. The CCD solid image pick up element 45 is mounted onto the CCD stage 201. The CCD stage 201 is supported by the first pair of cylindrical slide rails 204 disposed parallel to the slide frame 202 in such a way that it is capable of sliding along the slide rails 204 in the horizontal direction of FIGs.7A and 7B.

The slide frame 202 is supported by the second pair of cylindrical slide rails 205 disposed parallel to the fixing frame 203, which is fixed by fixing elements (not shown). Furthermore, the slide frame 202 can be slid along the slid rails 205 in the vertical direction of FTGs.7A and 7B. The driving coils 106 are fixed onto the circular periphery of the CCD stage 201 at an angular spacing of approximately 90°, and the permanent magnets 206 are similarly fixed onto the circular periphery of the fixing frame 203 at an angular spacing of approximately 90°, in which case, the driving coils 106 and the magnets 206 are disposed to face each other. The magnetic field generated from the driving coils 106 causes the CCD stage 201 to be moved. Each of the Hall elements 107 disposed in the vicinity of the corresponding

7

driving coil 106 detects the strength or intensity of magnetic field generated from the magnets 206, thereby enabling the displacement of the CCD stage 201 to be determined in two orthogonal directions from the field strength.

The CCD stage 201, onto which the CCD solid image pick up element 45 is fixed, can be displaced in the two orthogonal directions relative to the fixing frame 203. A supply of the electric current to the driving coils 106 generates the driving force for displacing the CCD stage 201 relative to the fixing frame 203. A change of the mutual spatial relationship between the CCD stage 201 and the fixing frame 203 allows the mutual spatial relationship between the magnets 206 and the Hall elements 107 to be changed, thereby making it possible to alter the sensor voltage output from the Hall elements 107. The signal thus output is transmitted to the CPU block 54 via the Hall element amplifier 108 and A/D converter 101, so that the mutual spatial relationship between the CCD stage 201 and the fixing frame 203 can be determined by the CPU block 54.

In accordance with the invention, the camera shake compensation is achieved by controlling the amount of displacement of the CCD solid image pick up element 45 on the basis of the sensor signal output from the angular sensor 102.

The driving force for the CCD solid image pick up element 45 results from the magnetic force generated by supplying current to the four coils 106 arranged around the periphery of the CCD solid image pick up element 45 in such a way that each of the coils 106 faces the corresponding one of magnets 206, which are also arranged around the periphery of the CCD solid image pick up element 45. As a result, the magnitude of displacement of the CCD solid image pick up element 45 can be controlled by the current in the coils 106.

The angular sensor 102, e.g., a gyro-sensor, is disposed in the digital camera, such that both the rotation angle in the pitch direction and the rotation angle in the yaw direction can be detected.

The detection signal output from the gyro-sensor is processed during a period of T [s] by applying the A/D conversion thereto. The symbols used in the analysis of displacement are as follows:

$\omega$yaw (t)     instantaneous angular velocity in the yaw direction;
$\omega$pitch (t)     instantaneous angular velocity in the pitch direction;
$\theta$yaw (t)     rotation angle in the yaw direction;
$\theta$pitch (t)     rotation angle in the pitch direction;
Dyaw (t)     displacement resulting from the rotation in the yaw direction;
Dpitch (t)     displacement resulting from the rotation in the pitch direction.

In this case, $\theta$yaw (t) and $\theta$pitch (t) can be determined from the following relations:

$$\theta yaw\ (t) = \Sigma \omega yaw\ (i) \cdot T, \qquad (i = 0 \text{ to } t) \tag{1}$$

$$\theta pitch(t) = \Sigma \omega pitch(i) \cdot T, \qquad (i = 0 \text{ to } t) \tag{2}$$

On the other hand, the focal length f can be determined from zoom point zp and focus point fp. Then, the amount of displacements, Dyaw(t) and Dpitch(t), can be determined in the following relations:

$$Dyaw(t) = f * \tan(\theta yaw(t)) \tag{3}$$

$$Dpitch(t) = f * \tan(\theta pitch(t)) \tag{4}$$

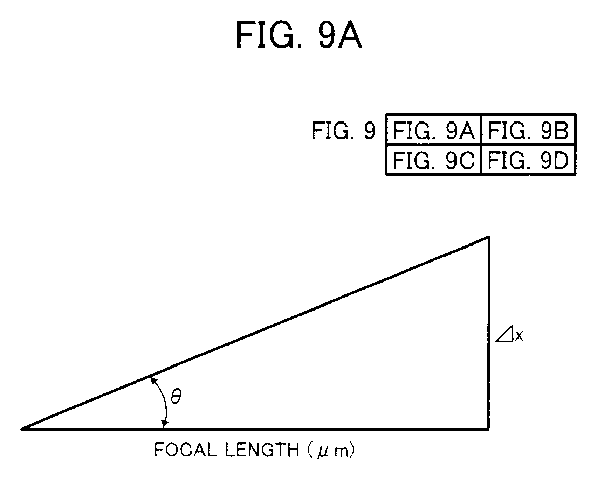

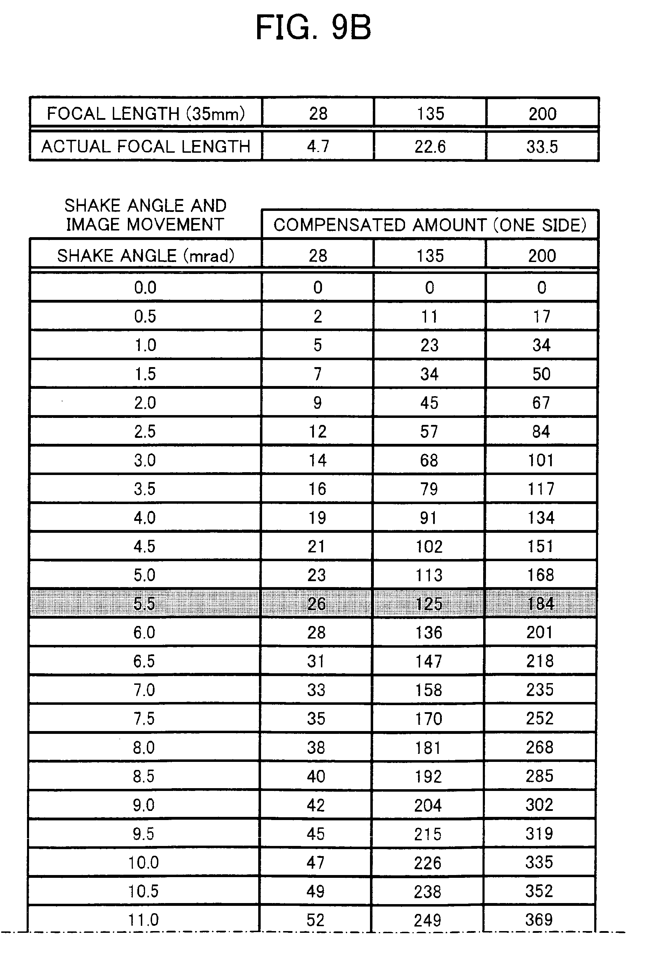

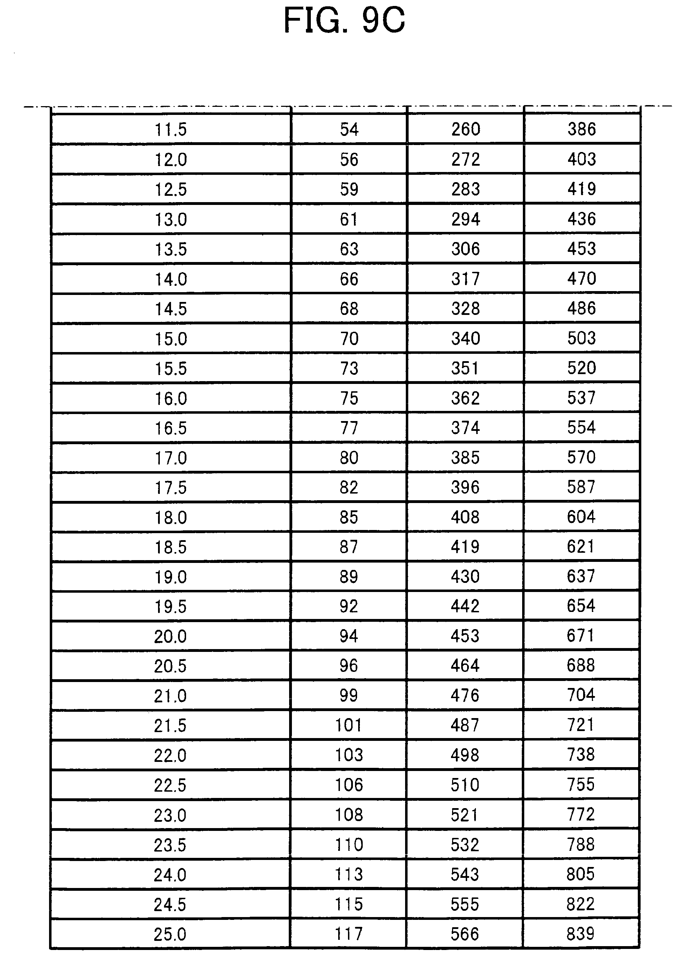

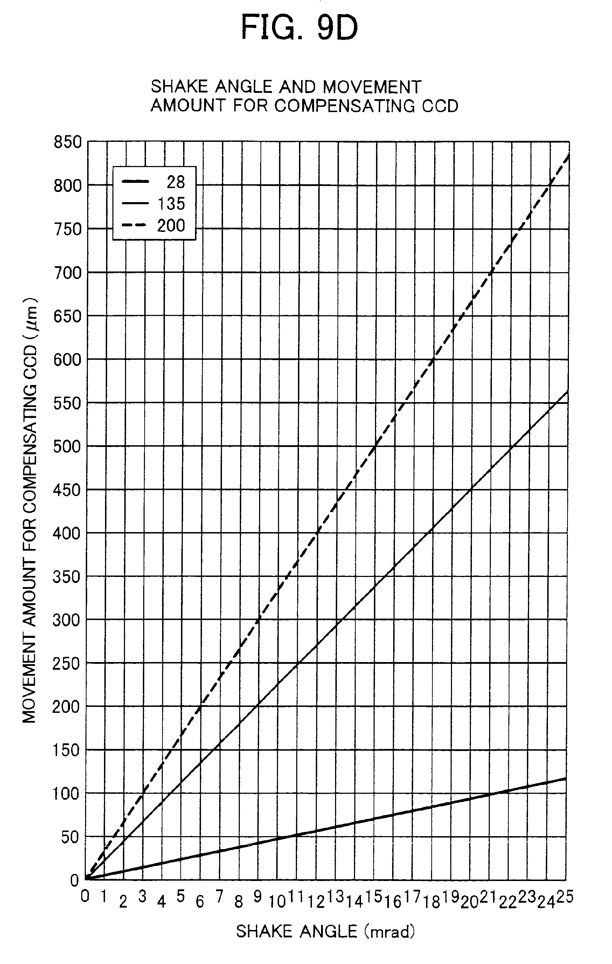

These values represent the magnitudes of displacement necessary for the CCD solid image pick up element 45 (see FIG.9).

In order to displace the CCD solid image pick up element 45 by the above magnitudes, a servo-control is carried out during a period of, e.g., T[s].

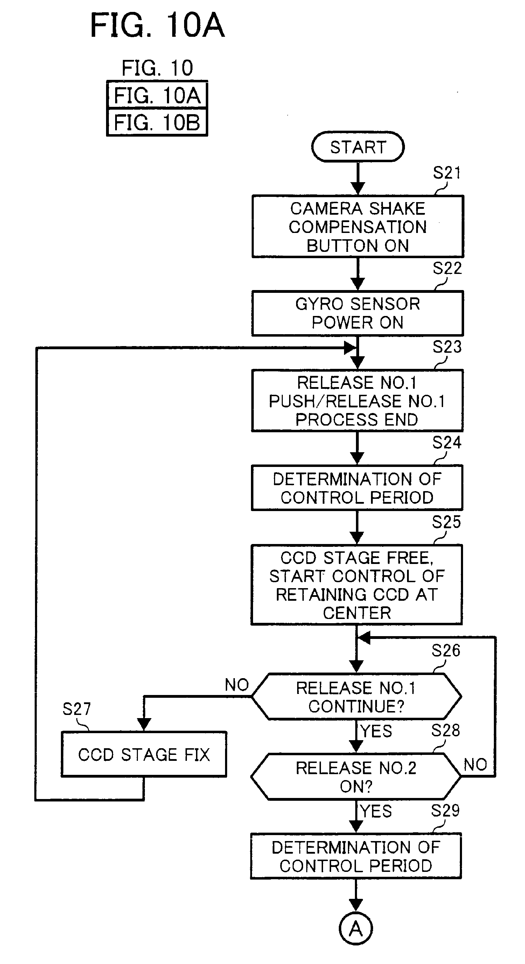

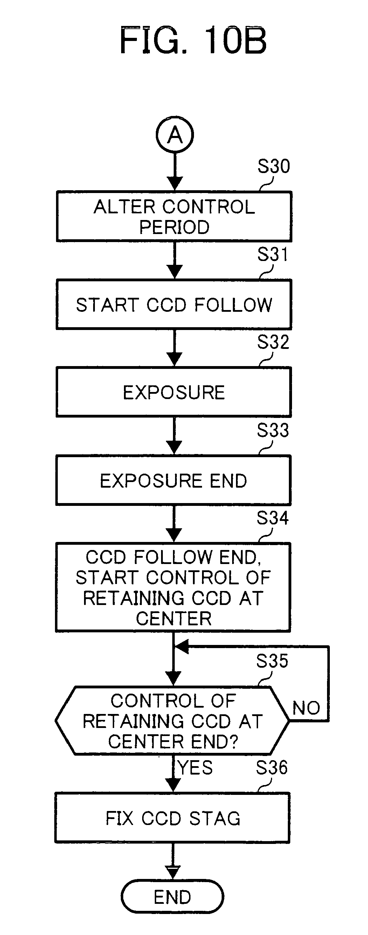

FIG.10 is a flow chart of describing sequential actions performed for shooting in the course of the camera shake compensation according to the invention.

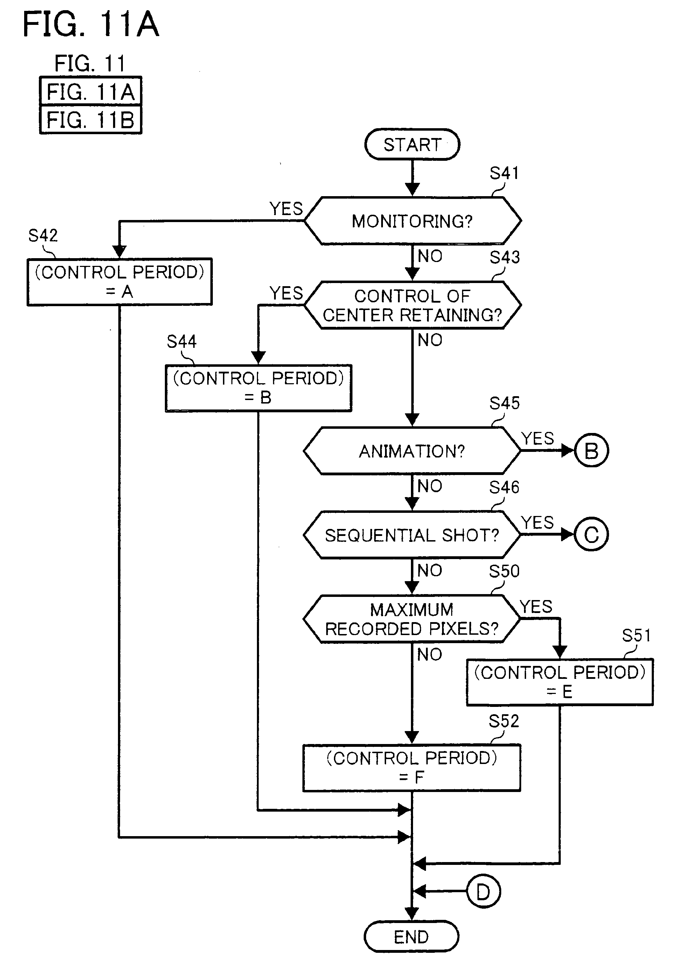

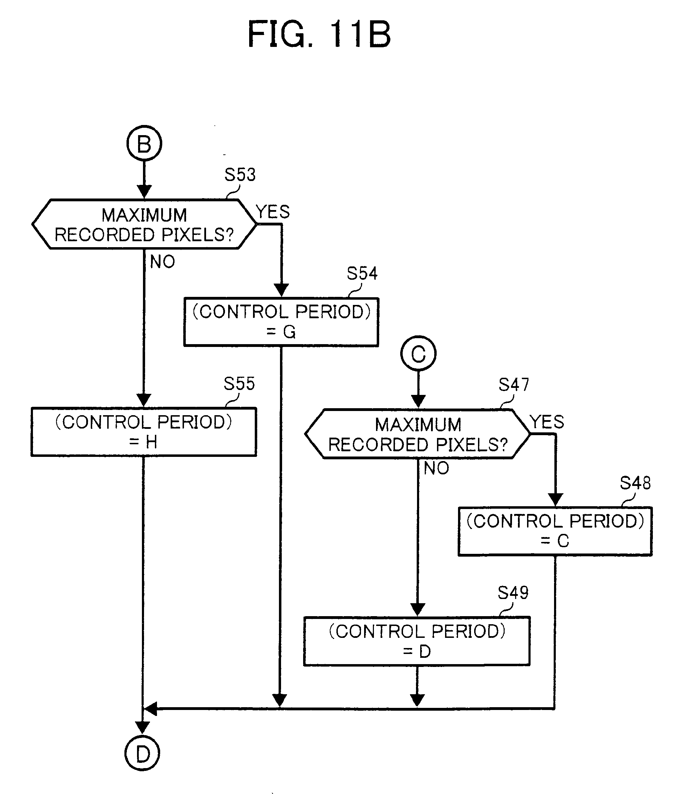

After starting the camera operation, a button (not shown) for camera shake compensation in the operation section 19 is pushed (step S21). Then, both the angular sensor 102, for instance, a gyro-sensor and the sensor amplifier 103 are turned on (step S22). Thereafter, the release button 9 in the operation section 19 is set in the first position (Release No. 1), and then the focusing operation ends (step S23). Subsequently, the control period for the process of monitoring is determined (step S24). The process of step S24 will be further described, referring to FIG. 11. When the control period is determined, the CCD stage 201 is released, thereby making it possible to move the stage in the vertical and horizontal directions. At the same time, the D/A converter 104, coil drivers 105, driving coils 106, Hall elements 107 and Hall element amplifiers 108 start to operate, and a control also starts for retaining the CCD solid image pick up element 45 at a predetermined central position.

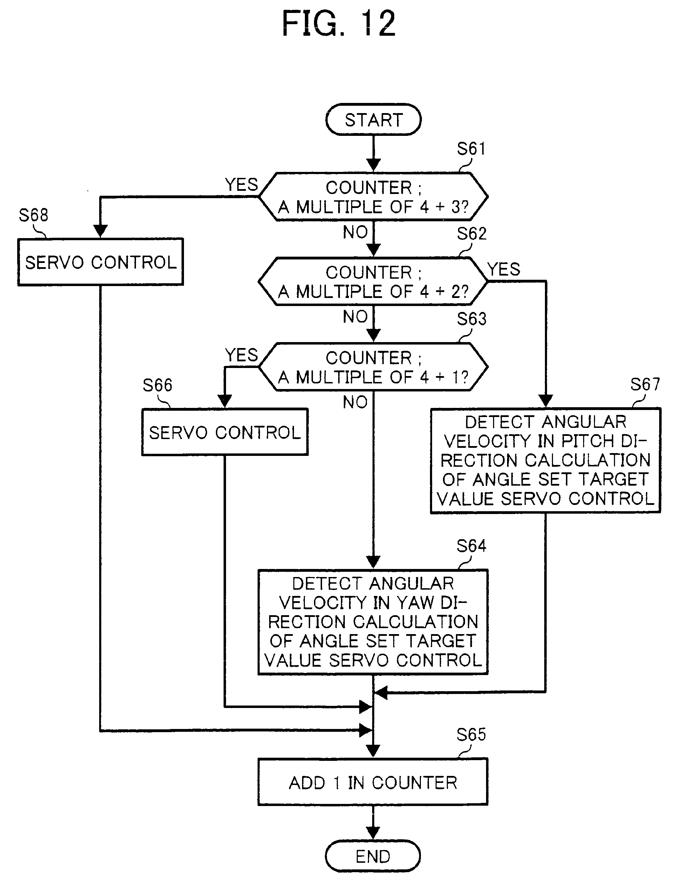

In this case, the CCD stage 201 is normally fixed at a central position by an appropriate sustain mechanism (not shown). However, the CCD stage 201 is released and becomes movable in the vertical and horizontal directions, only after a switch for compensating the camera shake is turned on, and then the control period is determined. At any rate, the CCD stage 201 has to he retained in the central position except for the compensation operation, in such a manner that it is not completely free, even when it is movable. Thereafter, it is inspected whether or not the operation of Release No. 1 continues (step S26). When the operation does not continue, the CCD stage 201 is fixed (step S27), and then the flow returns to step S23. These procedures are repeated. When the operation of Release No.1 continues, the second step (Release No.2) operation of the release button 9 is checked (step S28). If Release No. 2 is not set "ON' (that is, the release button 9 is not pushed down to the second step position), the flow returns to step S26. Simultaneously, the release button 9 is examined as for setting two points, Release No.1 and Release No.2. If Release No.2 is set "ON" in step S28, a determination of the control period for shooting (see FIG.11) is carried out (step S29), and then the control period is replaced with the control period thus determined (step S30). Thereafter, the operation of compensating camera shakes (see FIG.12) starts, in which case, the CCD solid image pick up element 45 is moved along with the CCD stage 201 carrying the element, in such a way that the displacement of the camera due to the shake is removed (step S31). Then, the exposure to the object is carried out (step S32).

At the end of exposure (step S33), the camera shake compensation with the aid of the movement of the CCD solid image pick up element 45 together with the CCD stage 201 ends, and the process of retaining the CCD stage 201 in the central position starts (step S34). After confirming the start of the process (step S35), the CCD stage 201 is fixed (step S36), and then the process ends.

The determination of the control periods in steps S24 and S29 is carried out, as shown in FIG. 11. At the start of the process, it is checked whether or not it is operated in the monitoring mode (step S11). In the monitoring mode, the control period is set to be "a" (step S42), and then the process ends. If, however, the monitoring mode is not identified in the step S41, it is checked whether or not the control of retaining the CCD stage 201 at the central position is applied (step S43). If so, the control period is set to be "b" (step S44), and then the process ends. However, if not so in the step 43, it is checked whether or not the photograph to be shot is an animation (step S45). In the case of no animation, it is checked whether or not it is a sequentially shot images (step S46). If the sequentially shot images are confirmed in the step S46, it is further checked whether or not the number of pixels to be recorded is maximum (step S47). In the case of the maximum number of pixels to be recorded, the control period is set to be "c" (step S48), and then the process ends.

However, if the maximum number of pixels to be recorded is not confirmed in the step S47, the control period is set to be "d" (step S49), and then the process ends. If the sequentially shot images is not confirmed in the step S46, it is further checked whether or not the number of pixels to be recorded is maximum (step S50). If the number of pixels is maximum, the control period is set to be "e" (step S 51), and then the process ends. If the number of pixels is not maximum in the step S60, the control period is set to be "f" (step S52), and then the process ends. If the animation is confirmed in the step S45, it is further checked whether or not the number of pixels to be recorded is maximum (step S53). If the number of pixels is maximum, the control period is set to be "g" (step S54), and then the process ends. If the number of pixels is not maximum in the step S53, the control period is set to be "h" (step S55), and then the process ends.

FIG.12 is a flow chart showing the process of compensating the camera shake. This process starts in a period of T [s]. The process can be realized by software, and can be carried out with the highest priority. The process interval T[s] is one of the control periods "a" to "h". For the sake of simplicity, the description is made for the following process: the servo-control is carried out within each control period; angular information, e.g., angular velocity is sensed for alternate control periods, and then the angular position is determined, in which case, the determination is carried out alternately either in the yaw direction or the pitch direction.

For this purpose, the number of controls is counted by a counter, and then it is inspected whether or not the counted value in the counter is a multiple of 4 + 3 (step S61). If the counted value is not a multiple of 4 + 3, it is further inspected whether or not the counted value is a multiple of 4 + 2 (step S62). If the counted value is not a multiple of 4 + 2, it is inspected whether or not the counted value is a multiple of 4 + 1 (step S63). If the counted value is not a multiple of 4 + 1, the counted value can be regarded as a multiple of 4. Under this condition, the angular velocity in the yaw direction is detected, and, the angular position is determined therefrom. Based upon the angular position thus determined, a servo target value can be set, thereby making it possible to perform the servo-control (step S64). Thereafter, the counter is increased by one increment (step S65), and then the first control process ends. After starting the next control (the control in the second stage), the counted value has to be a multiple of 4 + 1.

Accordingly, it is confirmed in the step S61 that the counted value is not a multiple of 4 + 3. In this case, it is further confirmed in the step S62 that the counted value is not a multiple of 4 + 2. Subsequently, it is confirmed in the step S63 that the counted value is a multiple of 4 + 1. Hence, the servo-control is carried (step S66).

Then, the counter is increased by one increment (step S65), and the control process ends.

After starting the next control (the control in the third stage), the counted value has to be a multiple of 4 + 2. Accordingly, it is confirmed in the step S61 that the counted value is not a multiple of 4 + 3. Subsequently, it is confirmed in the step S62 that the counted value is a multiple of 4 + 2. In this case, the angular velocity in the pitch direction is detected to determine the corresponding angular position. In conjunction therewith, the servo target value is set and the servo control is carried out (step S67). Subsequently, the counter is increased by one increment (step S65), and then the control process ends. After starting the next control (the control in the fourth stage), the counted value has to be a multiple of 4 + 3. Accordingly, it is confirmed in the step S61 that the counted value is a multiple of 4 + 3, so that the servo control is carried out (step S68).

Subsequently, the counter is increased by one increment (step S65), and then the control process ends. The above-described processes are repeatedly carried out within each control period.

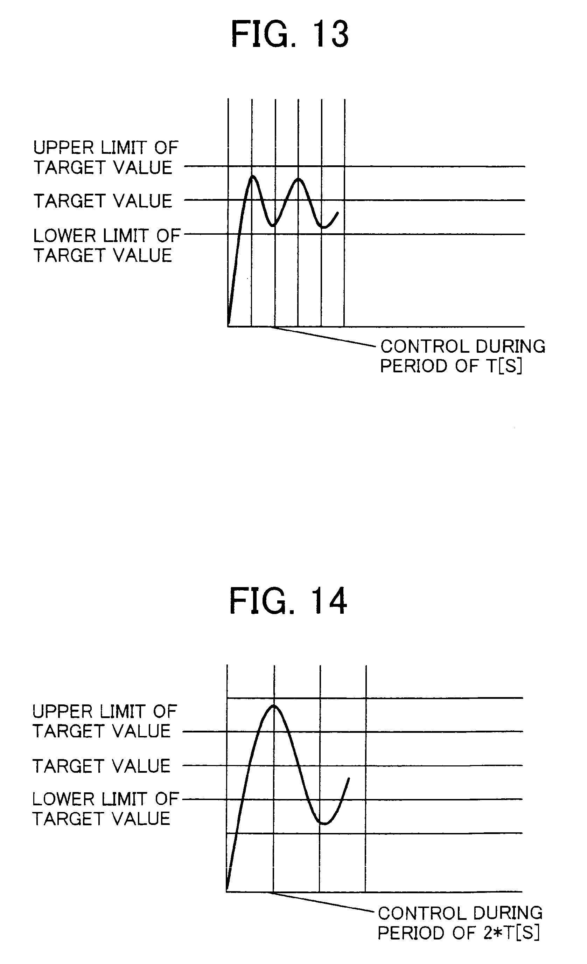

FIG. 13 is a diagram for describing the servo control for compensating the shake of the digital camera shown in FIG.1 with a sequence of T [s] period, whereas FIG. 4 is a diagram for describing the servo control with a sequence of 2*T [s] period.

The CCD solid image pick up element 45 has a pixel pitch of, for instance, A [μm], and it is used in at least two operation modes, i.e., the still image mode and monitoring mode. When a still image is shot with the maximum number of pixels, the servo control of the CCD stage 201 is carried out, in the sequence of T [s] period, as shown in FIG.13. In this case, the convergence width is assumed to be Y [μm]. In the operation mode of either monitoring an image or taking an animation, the servo control of the CCD stage 201 is carried out in the sequence of 2*T [s] period, as shown in FIG. 14. In this case, the following relations are used, instead of Eqs. (1) and (2):

$$\theta yaw\ (t) = \Sigma \omega yaw(i) \cdot 2{*}T \qquad (i = 0\ to\ t) \qquad\qquad (1')$$

$$\theta pitch\ (t) = \Sigma \omega pitch(i) \cdot 2{*}T \qquad (i = 0\ to\ t) \qquad\qquad (2')$$

As for Eqs. (3) and (4), the above mentioned relations can be used. Using these relations, the magnitude of displacement can be determined. In this case, the convergence width is assumed to be Z [μm].

Either in the monitoring mode or in the animation mode, image signals from the CCD solid image pick up element 45 are selectively abstracted therefrom or additionally supplemented thereto by the CCD solid image pick up element 45 or the system processor 50 to produce an image having a fourth of the total pixels in the horizontal direction and an eighth of the total pixels in the vertical direction, and then the image thus processed is stored in SDRAM. In this case, Z > Y However, the accuracy of the camera shake compensation for the monitoring or animation, in the case when the image is stored in SDRAM, is higher than that for the still image (because the number of used pixels is reduced in the monitoring mode and animation mode).

When taking a still image recorded at a 1/4 maximum pixel ratio both in the horizontal and vertical directions with a possible reduced size, the servo control of the CCD stage 201 is carried out in the sequence of 2*T [s] period. In this case, the convergence width is set to be Z [μm]. The size of the data having the maximum pixel number output from the CCD is reduced by the resize block 59 in the system processor 50, to a fourth of the original pixel numbers respectively in the horizontal and vertical directions, just before the JPEG encoding. Although Z > Y, the accuracy of the camera shake compensation for the recorded image is higher than that for the still image taken with the maximum pixel number (because the number of the pixels used is smaller due to the re-size of reduction).

In the following, several variations of operation are described. In this case, only differences from the above-mentioned operation are pointed out.

A multi-task concept is used to prepare software. In most cases, however, parallel processing cannot practically be employed. Therefore, any other process cannot be executed during the process of camera shake compensation. In the DMA (direct memory access), no CPU contributes to the process, thereby allowing the parallel processing to be exceptionally executed. However, there arises a problem that the signal transmission rate in the bus system is significantly reduced during the process of camera shake compensation. To overcome the limitation of the signal transmission capacity in the bus system, the number of the compensation process to be started in FIG. 12 is reduced, taking the conditions of shooting into account, as exemplarily listed below:

| Shooting Condition | Period for Servo Control |
|---|---|
| Monitoring: | 2*T [s] |
| Still image shooting after ending the pervious image processing: | T [s] |
| Sequentially pushing of the shutter button: | 2*T [s] |
| Sequence photographs: | 2*T [s] |
| Animation: | 3*T [s] |
| Auto-bracket: | 2*T [s] |
| Flush shooting: | 2*T [s] |

While the present invention has been described with the preferred embodiments, it is to be understood that the present invention is not limited thereto. On the contrary, the invention is intended to cover various modifications and equivalent arrangements within the spirit and scope of the appended claims. In other words, the camera according to the present invention equipped with a camera shake compensating mechanism including: an angular information acquisition sensor for acquiring the angular information about at least one of the angular position, angular velocity and angular acceleration of the camera; a compensation operating mechanism for displacing a compensation performing section to compensate the camera shake; a position detection sensor for detecting the operational position of the compensation performing section in the compensation operating mechanism; and a servo control device for displacing the compensation operating mechanism with a servo control, in response to the angular change of the camera obtained by the angular information acquisition sensor, referring to the operational position obtained by the position detection sensor may be constituted such that a frequency control device is provided to be capable of variably controlling at least one of the frequency of performing the servo control by the servo control device and the frequency of performing the angular information acquisition by the angular information acquisition sensor.

Moreover, the camera according to the present invention may be constituted such that the compensation performing section driven by the compensation operating mechanism includes at least one of an image pick up element and a camera shake compensating lens system disposed in an imaging optics.

Moreover, the camera according to the present invention may be constituted such that the frequency control device changes at least one of both the frequency of performing the servo control and the frequency of performing the angular information acquisition in accordance with shooting conditions.

Moreover, the camera according to the present invention may be constituted such that when the frequency of performing at least one of the servo control and the angular information acquisition is A1 [times/ms] in the case of the still image shooting, and when the frequency of performing at least one of the servo control and the angular information acquisition is B1 [times/ms] in the case of the monitoring mode, using as an electronic finder, it is set that $B1 < A1$.

Moreover, the camera according to the present invention may be constituted such that when the minimum frequency of occurring blur due to the camera shake in a monitoring image during the servo control is C1 [times/ms], it is set that $C1 \leq B1$.

Moreover, the camera according to the present invention may be constituted such that when the frequency of performing at least one of the servo control and the angular information acquisition is A1 [times/ms] in the case of shooting a still image, and when the frequency of performing at least one of the servo control and the angular information acquisition is B2 [times/ms] in the case of shooting an animation, it is set that $B2 < A1$.

Moreover, the camera according to the present invention may be constituted such that when the minimum frequency of occurring blur due to the camera shake in an animation during the servo control is C2 [times/ms], it is set that $C2 \leq B2$.

Moreover, the camera according to the present invention may be constituted such that when the frequency of performing at least one of the servo control and the angular information acquisition is A1 [times/ms] in the case of shooting a still image at the normal shooting mode, and when the frequency of performing at least one of the servo control and the angular information acquisition is B3 [times/ms] in the case of shooting sequence images at the sequence shooting, it is set that $B3 < A1$.

Moreover, the camera according to the present invention may be constituted such that when the minimum frequency of occurring blur due to the camera shake in the case of shooting sequence still images during the servo control is C3 [times/ms], it is set that $C3 \leq B3$.

Moreover, the camera according to the present invention may be constituted such that when the frequency of performing at least one of the servo control and the angular information acquisition is A2 [times/ms] in the case of the maximum pixel number, and when the frequency of performing at least one of the servo control and the angular information acquisition is B4 [times/ms] in the case of the pixel number being smaller than the maximum pixel number, it is set that B4 <A2.

Moreover, the camera according to the present invention may be constituted such that when the minimum frequency of occurring blur due to the camera shake in the case when the pixel number is smaller than the maximum pixel number is C4 [times/ms], it is set that C4 ≤ B4.

In accordance with the present invention, the above-described structural feature successfully provides a camera and a method for controlling thereof, which effectively reduce the load in the processing for the servo control and the acquisition of angular information along with both energy saving and resource saving, without any substantial reduction in the accuracy in the camera shake compensation.

**Claims**

1. A camera equipped with a camera shake compensating mechanism, comprising:

   an angular information acquisition sensor (102) arranged to acquire angular information about at least one of the angular position, angular velocity and angular acceleration of the camera;
   a compensation operating mechanism (50,54,103,104) arranged to displace a compensation performing section to compensate for camera shake;
   a position detection sensor (107) arranged to detect the operational position of the compensation performing section in the compensation operating mechanism; and
   a servo control device (101,106) arranged to displace the compensation operating mechanism with a servo control, in response to the angular change of the camera obtained by the angular information acquisition sensor, referring to the operational position obtained by the position detection sensor,

   **characterised by**:

   a frequency control device (104,105,108) arranged to variably control at least one of the frequency of performing the servo control by the servo control device and the frequency of performing the angular information acquisition by the angular information acquisition sensor.

2. A camera according to claim 1, wherein the compensation performing section driven by the compensation operating mechanism includes at least one of an image pick up element and a camera shake compensating lens system disposed in an imaging optics.

3. A camera according to claim 1 or 2, wherein the frequency control device changes at least one or both of the frequency of performing the servo control and the frequency of performing the angular information acquisition, in accordance with shooting conditions.

4. A camera according to claim 3, wherein the frequency of performing at least one of the servo control and the angular information acquisition in the case of the still image shooting, A1, and the frequency of performing at least one of the servo control and the angular information acquisition in the case of the monitoring mode, using an electronic finder, B1, satisfy the inequality:

$$B1 < A1.$$

5. A camera according to claim 4, wherein the minimum frequency of blur occurring due to the camera shake in a monitoring image during the servo control, C1, satisfies the inequality:

$$C1 \le B1.$$

6. A camera according to claim 3, 4 or 5, wherein the frequency of performing at least one of the servo control and the angular information acquisition in the case of shooting a still image, A1, and the frequency of performing at least one of the servo control and the angular information acquisition in the case of shooting a moving image, B2, satisfy

the inequality:

$$B2 < A1.$$

**7.** A camera according to claim 6, wherein the minimum frequency of blur occurring due to the camera shake in a moving image during the servo control, C2, satisfies the inequality:

$$C2 \leq B2.$$

**8.** A camera according to any one of claims 3 to 7, wherein the frequency of performing at least one of the servo control and the angular information acquisition in the case of shooting a still image at the normal shooting mode, A1, and the frequency of performing at least one of the servo control and the angular information acquisition in the case of shooting sequence images at the sequence shooting, B3, satisfy the inequality:

$$B3 < A1.$$

**9.** A camera according to claim 8, wherein the minimum frequency of blur occurring due to the camera shake in the case of shooting sequence still images during the servo control, C3, satisfies the inequality:

$$C3 \leq B3.$$

**10.** A camera according to any one of claims 3 to 9, wherein the frequency of performing at least one of the servo control and the angular information acquisition in the case of shooting images having the maximum pixel number, A2, and the frequency of performing at least one of the servo control and the angular information acquisition in the case of shooting images having a maximum pixel number smaller that the maximum pixel number, B4, satisfy the inequality:

$$B4 < A2.$$

**11.** A camera according to claim 10, wherein the minimum frequency of blur occurring due to the camera shake in the case of shooting images having a pixel number smaller than the maximum pixel number, C4, satisfies the inequality:

$$C4 \leq B4.$$

**12.** A control method for compensating for the shake of a camera, using the following elements:

an angular information acquisition sensor for acquiring the angular information about at least one of the angular position, angular velocity and angular acceleration of the camera;
a compensation operating mechanism for displacing a compensation performing section to compensate the camera shake; and
a position detection sensor for detecting the operational position of the compensation performing section in the compensation operating mechanism;

wherein:

the camera shake compensation is carried out by displacing the compensation operating mechanism with a servo control, in response to the angular change of the camera obtained by the angular information acquisition sensor, referring to the operational position obtained by the position detection sensor; and
at least one of both the frequency of performing the servo control by the servo control device and the frequency of performing the angular information acquisition by the angular information acquisition sensor is variably controlled.

**13.** A control method according to claim 12, wherein the compensation performing section driven by the compensation operating mechanism includes at least one of an image pick up element and a camera shake compensating lens system disposed in an imaging optics.

**14.** A control method according to claim 12 or 13, wherein the frequency control device changes at least one of both the frequency of performing the servo control and the frequency of performing the angular information acquisition in accordance with shooting conditions.

**15.** A control method according to claim 14, wherein the frequency of performing at least one of the servo control and the angular information acquisition in the case of the still image shooting, A1, and the frequency of performing at least one of the servo control and the angular information acquisition in the case of the monitoring mode, using as an electronic finder, B1, satisfy the inequality:

$$B1 < A1.$$

**16.** A control method according to claim 15, wherein the minimum frequency of blur occurring due to the camera shake in a monitoring image during the servo control, C1, satisfies the inequality:

$$C1 \le B1.$$

**17.** A control method according to claim 14, 15 or 16, wherein the frequency of performing at least one of the servo control and the angular information acquisition in the case of shooting a still image, A1, and the frequency of performing at least one of the servo control and the angular information acquisition in the case of shooting a moving image, B2, satisfy the inequality:

$$B2 < A1.$$

**18.** A control method according to claim 17, wherein the minimum frequency of blur occurring due to the camera shake in a moving image during the servo control, C2, satisfies the inequality:

$$C2 \le B2.$$

**19.** A control method according to any one of claims 14 to 18, wherein the frequency of performing at least one of the servo control and the angular information acquisition in the case of shooting a still image at the normal shooting mode, A1, and the frequency of performing at least one of the servo control and the angular information acquisition in the case of shooting sequence images at the sequence shooting, B3, satisfy the inequality:

$$B3 < A1.$$

**20.** A control method according to claim 19, wherein the minimum frequency of blur occurring due to the camera shake in the case of shooting sequence still images during the servo control, C3, satisfies the inequality:

$$C3 \leq B3.$$

21. A control method according to any one of claims 14 to 20, wherein the frequency of performing at least one of the servo control and the angular information acquisition in the case of shooting images having the maximum pixel number, A2, and the frequency of performing at least one of the servo control and the angular information acquisition in the case of shooting images having a maximum pixel number smaller than the maximum pixel number, B4, satisfy the inequality:

$$B4 < A2.$$

22. A control method according to claim 21, wherein the minimum frequency of blur occurring due to the camera shake in the case of shooting images having a pixel number smaller than the maximum pixel number, C4, satisfies the inequality:

$$C4 \leq B4.$$

## FIG. 1

## FIG. 2

## FIG. 3

# FIG. 4A

MIRROR BODY UNIT 3

| | | | |
|---|---|---|---|
| ZOOM OPTICS 32 | FOCUS OPTICS 35 | APER- TURE UNIT 38 | MECHANICAL SHUTTER UNIT 41 |
| ZOOM LENS 30 | FOCUS LENS 33 | APER- TURE 36 | MECHANICAL SHUTTER 39 |

1

107 HALL ELEMENT

108 HALL ELEMENT AMP

102 ANGULAR SENSOR

103 SENSOR AMP

46

F/E-IC

45 CCD → 47 CDS → 48 AGC → 49 A/D

52 TG ← VD/HD SIGNAL

31 ZOOM DRIVE MOTOR

34 FOCUS DRIVE MOTOR

37 APER- TURE MOTOR

40 MECHANICAL SHUTTER MOTOR

42 ~ MOTOR DRIVER

4 STROBE LIGHT EMITTING SECTION

91 STROBE CIRCUIT

5 DISTANCE MEASURING UNIT

79 MICRO- PHONE

80 MIC AMP

81 VOICE RECORD- ING CIRCUIT

83 SPEAK- ER

85 AUDIO AMP

84 VOICE REPRO- DUCTION CIRCUIT

11 SUB-LCD

77 SUB-LCD DRIVER

75 SUB-CPU

14 ~ AF LED

15 ~ STROBE LED

7 ~ REMOTE CONTROL LIGHT RECEIVING SECTION

19 OPER- ATION SECTION

76 BUZZER

106 DRIVING COIL

105 COIL DRIVER

# FIG. 4B

| RAW-RGB IMAGE DATA | YUV IMAGE DATA | JPEG IMAGE DATA | SDRAM 67 |

SYSTEM PROCESSOR

| 56 USB BLOCK | 72 USB CONNEC-TOR |

| 101 A/D CON-VERTER | 57 SERIAL BLOCK | 73 SERIAL DRIVER CIRCUIT | 74 RS-232C CONNEC-TOR |

| 51 1ST CCD SIGNAL PROCESS BLOCK | 58 JPEG CODEC BLOCK | 50 |

| 53 2ND CCD SIGNAL PROCESS BLOCK | 59 RE-SIZE BLOCK | 69 LCD DRIVER | 13 LCD MONITOR |

| 54 CPU BLOCK | 60 TV SIGNAL DISPLAY BLOCK | 70 VIDEO AMP | 71 VIDEO JACK |

| 55 LOCAL SRAM | 61 MEMORY CARD CON-TROLLER BLOCK | 22 MEMORY CARD SLOT | 21 MEMORY CARD |

| 66 RAM | EMBEDDED MEMORY 68 |

CONTROL PROGRAM — ROM 65

D/A CONVERTER —104

# FIG. 5

START

S11 MODE SELECTOR DIAL SHOOTING MODE? — YES

NO

S12 MODE SELECTOR DIAL REPRODUCTION MODE? — YES

NO

S16 MONITORING

S17 SHOOT COMMAND? — YES

NO

S18 SHOOT

S15 REPRODUCTION

S13 PROCESS OTHER THAN SHOOT AND REPRODUCTION

S14 POWER BUTTON PUSH? — NO

YES

END

# FIG. 6

FIG. 7A

FIG. 7B

FIG. 7C

# FIG. 8

# FIG. 9A

| FIG. 9 | FIG. 9A | FIG. 9B |
|--------|---------|---------|
|        | FIG. 9C | FIG. 9D |

$\theta$

$\varDelta x$

FOCAL LENGTH $(\mu\,m)$

# FIG. 9B

| FOCAL LENGTH (35mm) | 28 | 135 | 200 |
|---|---|---|---|
| ACTUAL FOCAL LENGTH | 4.7 | 22.6 | 33.5 |

| SHAKE ANGLE AND IMAGE MOVEMENT | COMPENSATED AMOUNT (ONE SIDE) | | |
|---|---|---|---|
| SHAKE ANGLE (mrad) | 28 | 135 | 200 |
| 0.0 | 0 | 0 | 0 |
| 0.5 | 2 | 11 | 17 |
| 1.0 | 5 | 23 | 34 |
| 1.5 | 7 | 34 | 50 |
| 2.0 | 9 | 45 | 67 |
| 2.5 | 12 | 57 | 84 |
| 3.0 | 14 | 68 | 101 |
| 3.5 | 16 | 79 | 117 |
| 4.0 | 19 | 91 | 134 |
| 4.5 | 21 | 102 | 151 |
| 5.0 | 23 | 113 | 168 |
| 5.5 | 26 | 125 | 184 |
| 6.0 | 28 | 136 | 201 |
| 6.5 | 31 | 147 | 218 |
| 7.0 | 33 | 158 | 235 |
| 7.5 | 35 | 170 | 252 |
| 8.0 | 38 | 181 | 268 |
| 8.5 | 40 | 192 | 285 |
| 9.0 | 42 | 204 | 302 |
| 9.5 | 45 | 215 | 319 |
| 10.0 | 47 | 226 | 335 |
| 10.5 | 49 | 238 | 352 |
| 11.0 | 52 | 249 | 369 |

# FIG. 9C

| | | | |
|---|---|---|---|
| 11.5 | 54 | 260 | 386 |
| 12.0 | 56 | 272 | 403 |
| 12.5 | 59 | 283 | 419 |
| 13.0 | 61 | 294 | 436 |
| 13.5 | 63 | 306 | 453 |
| 14.0 | 66 | 317 | 470 |
| 14.5 | 68 | 328 | 486 |
| 15.0 | 70 | 340 | 503 |
| 15.5 | 73 | 351 | 520 |
| 16.0 | 75 | 362 | 537 |
| 16.5 | 77 | 374 | 554 |
| 17.0 | 80 | 385 | 570 |
| 17.5 | 82 | 396 | 587 |
| 18.0 | 85 | 408 | 604 |
| 18.5 | 87 | 419 | 621 |
| 19.0 | 89 | 430 | 637 |
| 19.5 | 92 | 442 | 654 |
| 20.0 | 94 | 453 | 671 |
| 20.5 | 96 | 464 | 688 |
| 21.0 | 99 | 476 | 704 |
| 21.5 | 101 | 487 | 721 |
| 22.0 | 103 | 498 | 738 |
| 22.5 | 106 | 510 | 755 |
| 23.0 | 108 | 521 | 772 |
| 23.5 | 110 | 532 | 788 |
| 24.0 | 113 | 543 | 805 |
| 24.5 | 115 | 555 | 822 |
| 25.0 | 117 | 566 | 839 |

# FIG. 9D

SHAKE ANGLE AND MOVEMENT
AMOUNT FOR COMPENSATING CCD

# FIG. 10A

FIG. 10

| FIG. 10A |
|----------|
| FIG. 10B |

```
                    ( START )
                        │
                        │ S21
                        ▼
              ┌─────────────────────┐
              │   CAMERA SHAKE      │
              │   COMPENSATION      │
              │    BUTTON ON        │
              └─────────────────────┘
                        │ S22
                        ▼
              ┌─────────────────────┐
              │    GYRO SENSOR      │
              │     POWER ON        │
              └─────────────────────┘
                        │ S23
                        ▼
              ┌─────────────────────┐
              │   RELEASE NO.1      │
              │ PUSH/RELEASE NO.1   │
              │    PROCESS END      │
              └─────────────────────┘
                        │ S24
                        ▼
              ┌─────────────────────┐
              │  DETERMINATION OF   │
              │   CONTROL PERIOD    │
              └─────────────────────┘
                        │ S25
                        ▼
              ┌─────────────────────┐
              │   CCD STAGE FREE,   │
              │  START CONTROL OF   │
              │  RETAINING CCD AT   │
              │      CENTER         │
              └─────────────────────┘
                        │
                        ▼                 S26
        NO    ╱─────────────────────╲
      ◄───────  RELEASE NO.1        │
              ╲    CONTINUE?        ╱
  S27           ╲─────────────────╱
   │                    │ YES       S28
   ▼                    ▼
┌──────────┐   ╱─────────────────────╲  NO
│CCD STAGE │   │  RELEASE NO.2       │─────►
│   FIX    │   ╲     ON?            ╱
└──────────┘    ╲─────────────────╱
   │                    │ YES       S29
   │                    ▼
   │          ┌─────────────────────┐
   │          │  DETERMINATION OF   │
   │          │   CONTROL PERIOD    │
   │          └─────────────────────┘
   │                    │
   │                    ▼
   │                  ( A )
```

# FIG. 10B

A

S30
ALTER CONTROL PERIOD

S31
START CCD FOLLOW

S32
EXPOSURE

S33
EXPOSURE END

S34
CCD FOLLOW END, START CONTROL OF RETAINING CCD AT CENTER

S35
CONTROL OF RETAINING CCD AT CENTER END? — NO

YES    S36
FIX CCD STAG

END

# FIG. 11A

FIG. 11

| FIG. 11A |
|----------|
| FIG. 11B |

START

S41
MONITORING?

YES → S42
(CONTROL PERIOD) = A

NO → S43
CONTROL OF CENTER RETAINING?

YES → S44
(CONTROL PERIOD) = B

NO

S45
ANIMATION? — YES → B

NO

S46
SEQUENTIAL SHOT? — YES → C

NO

S50
MAXIMUM RECORDED PIXELS? — YES → S51
(CONTROL PERIOD) = E

NO

S52
(CONTROL PERIOD) = F

D

END

# FIG. 11B

# FIG. 12

START

S61 — COUNTER ; A MULTIPLE OF 4 + 3?

YES → S68 SERVO CONTROL

NO ↓

S62 — COUNTER ; A MULTIPLE OF 4 + 2?

YES → S67 DETECT ANGULAR VELOCITY IN PITCH DIRECTION CALCULATION OF ANGLE SET TARGET VALUE SERVO CONTROL

NO ↓

S63 — COUNTER ; A MULTIPLE OF 4 + 1?

YES → S66 SERVO CONTROL

NO ↓

S64 DETECT ANGULAR VELOCITY IN YAW DIRECTION CALCULATION OF ANGLE SET TARGET VALUE SERVO CONTROL

S65 ADD 1 IN COUNTER

END

# FIG. 13

UPPER LIMIT OF
TARGET VALUE

TARGET VALUE

LOWER LIMIT OF
TARGET VALUE

CONTROL DURING
PERIOD OF T[S]

# FIG. 14

UPPER LIMIT OF
TARGET VALUE

TARGET VALUE

LOWER LIMIT OF
TARGET VALUE

CONTROL DURING
PERIOD OF 2*T[S]

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2000081646 A
- JP 2001066655 A